# EUROPEAN PATENT SPECIFICATION

(11) **EP 1 841 664 B1**
(45) Date of publication and mention of the grant of the patent: **23.06.2010**
(21) Application number: 05706410.7
(22) Date of filing: 25.01.2005
(51) Int. Cl.: B65D 75/36, B65D 50/00, B65D 55/02, B65D 55/06, B32B 15/12, A61J 1/00

(54) **BEND AND PEEL PACKAGING WITH PIVOT**
BIEGE- UND ABZIEHVERPACKUNG MIT DREHPUNKT
EMBALLAGE A OPERCULES PLIABLES ET PELABLES A PIVOT

(43) Date of publication of application: 10.10.2007
(73) Proprietor: Intini, Thomas D, Brossard QC J4X 1B9 (CA)
(72) Inventor: Intini, Thomas D, Brossard QC J4X 1B9 (CA)
(74) Representative: Wasmeier, Alfons
(86) International application number: PCT/CA2005/000080
(87) International publication number: WO 2006/079191

(56) References cited:
- WO-A1-02/18229
- CA-A1- 2 192 458
- CA-C- 1 318 294
- US-A- 3 872 970
- US-A- 4 125 190
- US-A- 4 294 361

## Description

### FIELD OF THE INVENTION

The present invention relates to a tamper evident, senior friendly and child resistant package of the type operable by means of a tear strip.

### BACKGROUND OF THE INVENTION

Blister packs are well know in the art and are widely used to package individual items such as different forms of medication including tablets, capsules and the like. In addition, the packaging of a small amount of liquid in an individual blister is known.

Usually, the item or product is accessed through the rear of the blister pack which is provided with a tear strip.

As aforementioned, there are three different properties which any packaging ideally possesses. The first is that the package should be tamper evident such that there will be provided a clear indication when the package has been subject to tampering. A second feature is that the package be child resistant. As aforementioned, such packages are frequently used for medication and it is inherently desirable that one prevents young children from accessing the contents of the blister pack.

However, in making such packaging child resistant, it is also important that the package still be readily openable by those taking the medication. Since the most frequent users of medication are seniors, one must take into account the limits of their ability when they are suffering from various physical problems.

A conventional blister package usually comprises a laminate of a blister layer having article receiving pockets formed therein and with the article receiving pockets being covered by a foil backing layer. This foil backing layer is usually a form of an aluminum foil which is rupturable to permit access to the product in the blister pocket. While such a package is inherently tamper evident unless the whole foil layer is replaced, it is not very child resistant and indeed can prove attractive to some children.

To overcome this, there has been suggestions in the art, such as shown in U.S. Patent 4,537,312 to Intini, to include such certain child resistant features. In the arrangement of Intini, there is provided a blister package having a front layer and outer back layer which are sized larger than the conventional package and sealed to one another around their periphery and through apertures in the laminate. Tabs are provided at the edges of the sealed front and back layers and which tabs are connected to tear strips in the back layer, each of which overlays the foil covering a blister pocket. On removing the tear strips in the back layer, there will be left a layer or stratum of paperboard which overlays the foil to thereby reinforce it and make it more difficult for the child to access the product in the blister pocket.

In addition to that US Patent US-A-3,827,970 teaches a child-resistant blister package with a receptacle formed from a stiff flexible sheet material having a flange extending about it and adhered to a cover sheet.

Also US Patent 4,294,361 discloses a blister strip package comprising two coextensive sheets of heat sealable material provided with a first row of individual cavities for containing a product to be dispensed in one of said sheets. Said first row of cavities being laterally aligned with a corresponding, opposing row of an equal number of second cavities in the same sheet, the cavity bearing sheet being heat sealed to the other sheet except in the areas defined by the cavities.

A further feature which must always be considered in designing such products is the ability to efficiently manufacture the package at a reasonable cost. It is also highly desirable that the results be reproducible.

### SUMMARY OF THE INVENTION

It is an object of the present invention to provide blister pack packaging which is tamper evident, senior friendly and child resistant.

It is a further object of the present invention to provide blister pack packaging which is easy to manufacture and overcomes some of the deficiencies of the prior art packaging.

According to one aspect of the present invention, there is provided a child resistant and senior friendly tamper evident package, the package comprising a foil layer being rupturable, a tear strip being formed in said paperboard layer, said tear strip being adhered to said foil about the periphery of said tear strip, a tab member connected to said tear strip at one end thereof, the arrangement being such that when said tab and tear strip are removed, said foil then can be ruptured adjacent to said depression and said foil removed.

According to another aspect of the present invention, said package is further including a paper adhered to said rupturable foil there intermediate said rupturable foil layer and said paperboard layer.

According to further aspect of the present invention, said package is further including a second depression formed in said blister sheet between said first depression and said blister pocket.

In a still further aspect of the present invention, there is provided a child resistant and senior friendly tamper evident package comprising a tear strip formed in said paperboard layer, said tear strip overlying said blister pocket, said tear strip having a first tab at a first end thereof and being connected to said tear strip, a second tab at a second end of said tear strip end being separated from said tear strip by a cut through said paperboard layer, each of said tabs being non adhered to said foil layer and said foil having a gripping portion to enable grasping thereof, said gripping portion being exposed upon removal of said second tab.

The contents in the blister pocket are conventionally tablets or capsules or the like. However, as will be shown in the description of the preferred embodiments, the package of the present invention can be utilized with liquids and the like.

The materials utilized in the present invention are well known in the art. Thus, the blister layer may be formed with a number of blister pockets projecting from a front side thereof, each designed to receive a unit dosage of a pharmaceutical product or indeed, some other product. The sheet may comprise a normally rectangular continuous blister sheet of a flexible clear material which cannot be easily torn or ruptured. Typically, such a film would be a vinyl thermoplastic film having a thickness in excess of 10 mil.

The rupturable film sealed to the back side of the blister sheet is also well known in the art and may be selected from many known materials. Typically, such rupturable foils are of aluminum material having a thickness in the range of 1 mil and which may be joined to the blister sheet by conventional adhesives such as heat seal or coatings well known in the art.

In those applications wherein a paper layer is utilized, it again may use a heat sealable adhesive and comprise paper having a weight of between 13 pounds to 17 pounds. The reinforcing layer is preferably a paper product such as paperboard. The tear strips in the paperboard layer may be defined by parallel lines of perforations or slits in the outwardly facing side to thereby form longitudinal tear lines which define the tear strip. At one end of the strip, there may be a tab which is not sealed to the foil layer.

In one embodiment of the invention, in order to assist with the removal of the foil, a recess may be formed in the blister layer underneath one end on the foil such that the foil can be pushed into the recess to provide a tab portion to assist in the removal of the foil. If desired, a double recess may be utilized as will be described in the preferred embodiments.

In a further embodiment of the invention, the tear strip may be removed from a first end. Subsequently, the foil is gripped at the second end and lifted.

### BRIEF DESCRIPTION OF THE DRAWINGS

Having thus generally described the invention, reference will be made to the accompanying drawings illustrating embodiments thereof, in which :
- Figure 1: is a top plan view, partially in cut-away, of a further embodiment of the present invention;
- Figure 2: is a cross-sectional view through a blister pocket of the embodiment of Figure 1;
- Figure 3: is an exploded view illustrating the various components of the package of Figure 1;
- Figures 4 and 5: are views similar to Figure 2 illustrating opening of the package;
- Figure 6: is a cross-sectional view of a further embodiment of a package similar to that of Figures 3 and 4;
- Figure 7: is a cross-sectional view through a blister pocket of a further embodiment of the present invention;
- Figures 8 to 11: are cross-sectional views similar to Figure 7 illustrating opening of the package; and
- Figures 12 to 18: illustrate an embodiment similar to that of Figures 1 to 5, but utilizing a double depression in the blister layer to aid in removal of the foil.

### DESCRIPTION OF THE PREFERRED EMBODIMENTS

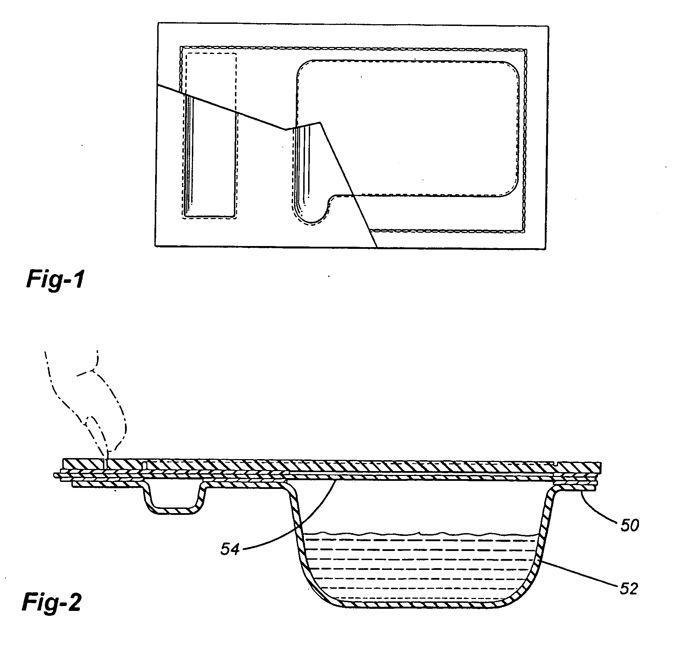

In the embodiment illustrated in Figures 1 through 5, there is provided a package which has a blister layer 50, the blister layer 50 having blister pockets 52 formed therein. A rupturable foil layer 54 is secured by adhesive 56 to the backside of blister layer 50 in a conventional manner. Similarly, there is provided a reinforcing paperboard layer 58 secured to rupturable foil layer 54 by means of adhesive 60. Tear strips 62 are formed in paperboard layer 58, each tear strips 62 having a tab 64 associated therewith.

In this embodiment, each tear strip 62 and tab 64 is arranged so that they are sealed about the periphery of the blister pocket 52.

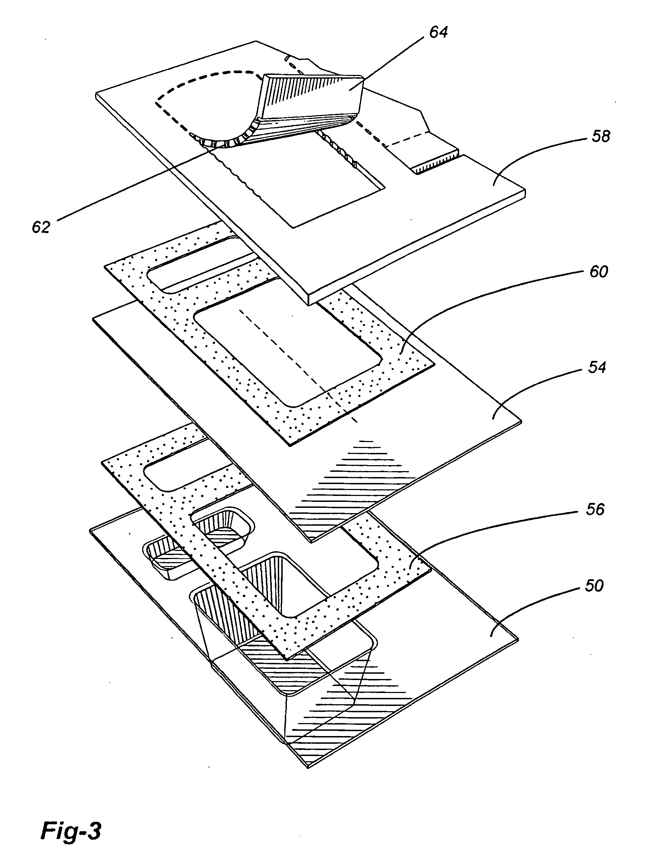

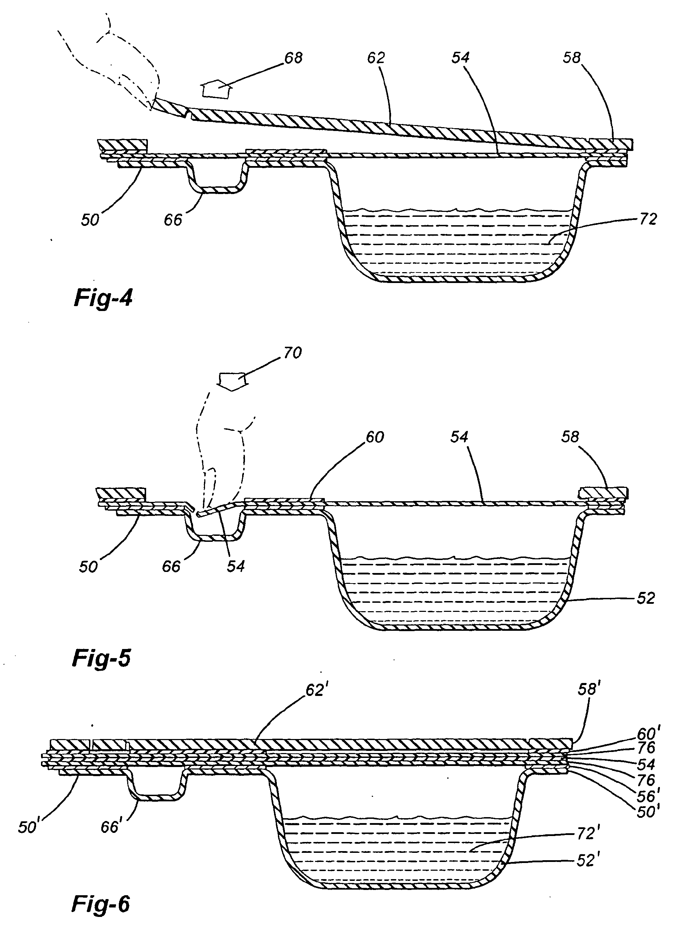

As may be seen in Figures 3 and 4, there is also provided a depression 66 formed in blister layer 50. As illustrated in Figure 4, following removal of the paperboard layer or portions thereof, a finger may then be utilized as indicated by arrow 70 to break the remainder of the paperboard layer and foil layer. This foil layer may then be removed from around blister pocket 82 to provided access to the contents of the blister pocket.

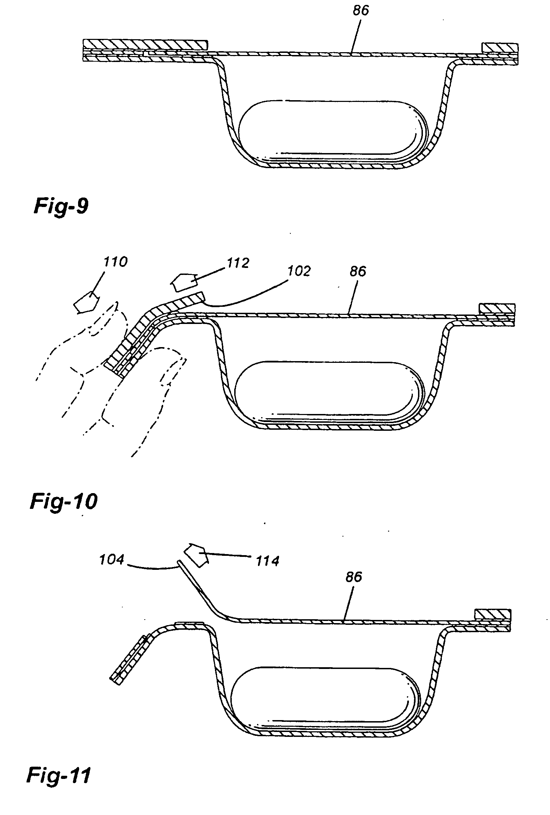

In Figure 11, there is illustrated a modified version of the embodiment of Figures 6 through 10. Accordingly, similar reference numerals with a prime are utilized for similar components.

In this embodiment, there is provided a blister layer 50' having a blister pocket 52' which, in the illustrated embodiment, contains a liquid 72'. Naturally, a capsule, tablet or other object could be placed therein.

The foil layer 54' is secured to blister layer 50' by means of adhesive 56'. However, on top of foil layer 54', there is provided a paper layer 76 which may be of any desired weight. On top of paper layer 76, there is provided a paperboard layer 58' with adhesive 60'. A tear strip 62' is formed therein. In operation, removal is essentially the same in that paperboard layer 62' is initially removed. However, the reinforcing layer of paper 76 provides additional security to the package. The foil layer 54' and paper layer 76 would be removed together. Also, a thicker foil layer or a foil thin film can also be used instead of the paper/foil.

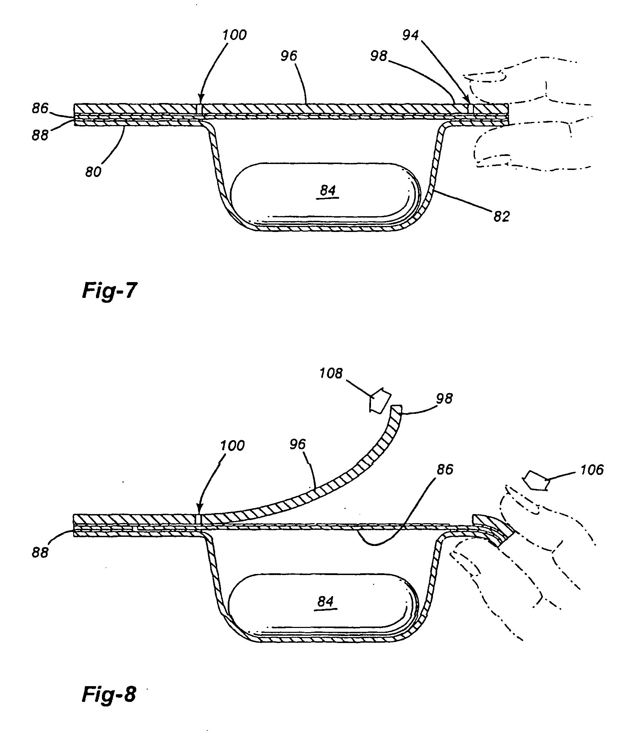

A still further embodiment of the present invention is illustrated in Figures 7 through 11 and reference will now be had thereto.

In this embodiment, there is provided a package which includes a blister layer 80 having a blister pocket 82 therein for containing a capsule 84. Sealed to blister layer 80 by means of adhesive 88 is a foil layer 86. In turn, a paperboard layer 90 is secured to foil layer 86 by means of adhesive 92.

A tear strip 96 has a slit 94 formed at one end thereof. A first tab portion 98 is not adhered to foil layer 86 and access may be gained thereto to completely remove tear strip 96.

At the other end of tear strip 96, there is provided a second tab 102 which is partially defined by slit 100. Thus, as may be seen in Figures 7 and 8, a slight pressure on the package will permit access to tab 98 to permit removal of tear strip 96. Removal of tear strip 96 stops at slit 100.

Subsequently, second tab 102, which is likewise not adhered to foil layer 86, may then be moved. Underneath this portion of the paperboard, there is provided a foil layer tab 104 which is likewise not adhered to blister layer 80. This permits removal of the foil layer as illustrated by arrow 114.

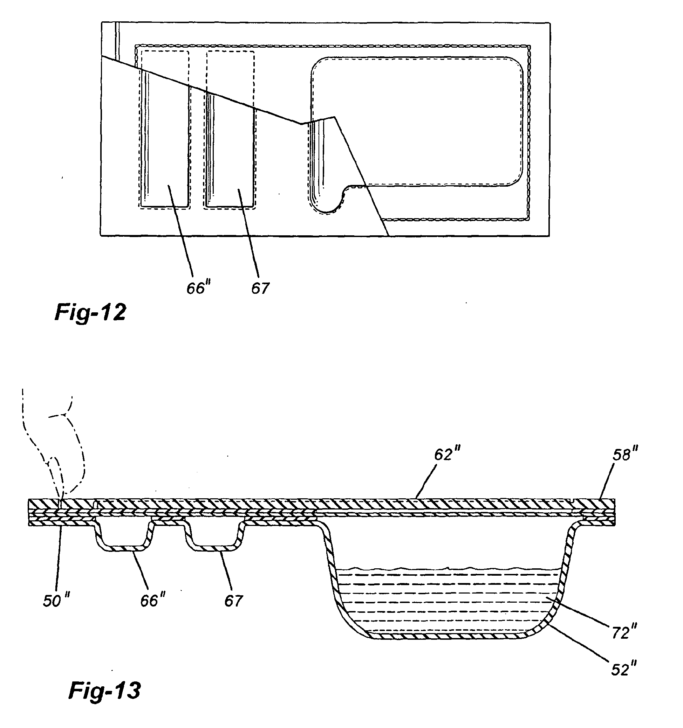

Referring to the embodiment of Figures 12 to 16, the arrangement shown therein is similar to that illustrated in Figures 1 to 5 and like reference numerals utilizing a double prime will be employed.

Thus, there is provided a package having a blister layer 50" with blister pockets 52" formed therein. A rupturable foil layer 54" is secured by adhesive 56" to the back side of blister layer 50" in a conventional manner. Similarly, a reinforcing paperboard layer 58" is secured to rupturable foil layer 54" by means of adhesive 60". Tear strips 62" are formed in paper layer 58", each tear strip 62" having a tab 64" associated therewith. As in the previously described embodiment, each tear strip 62" and tab 64" is arranged so that they are sealed about the periphery of the blister pocket 52".

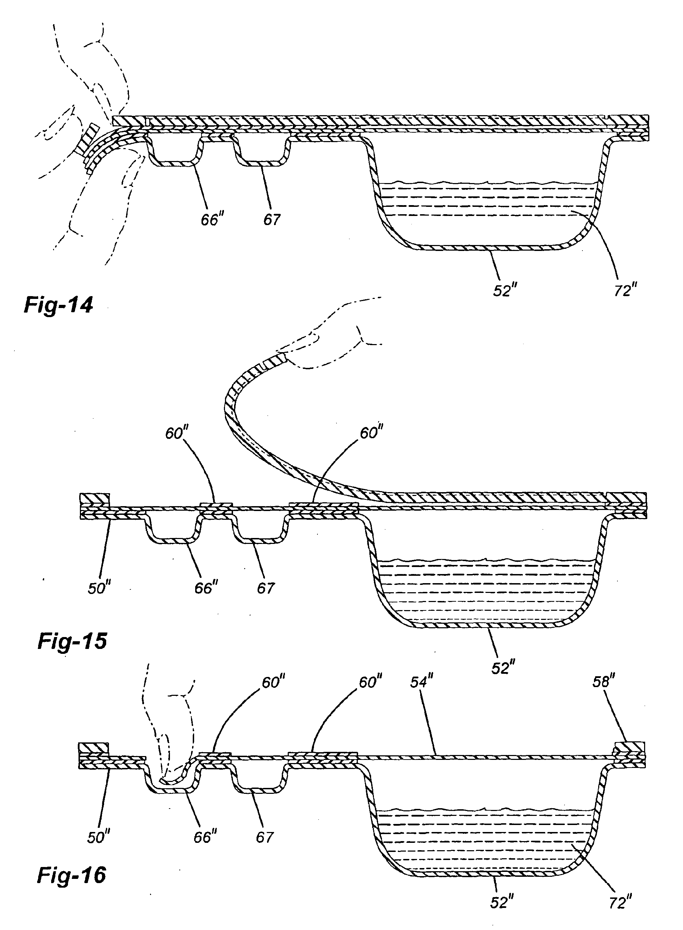

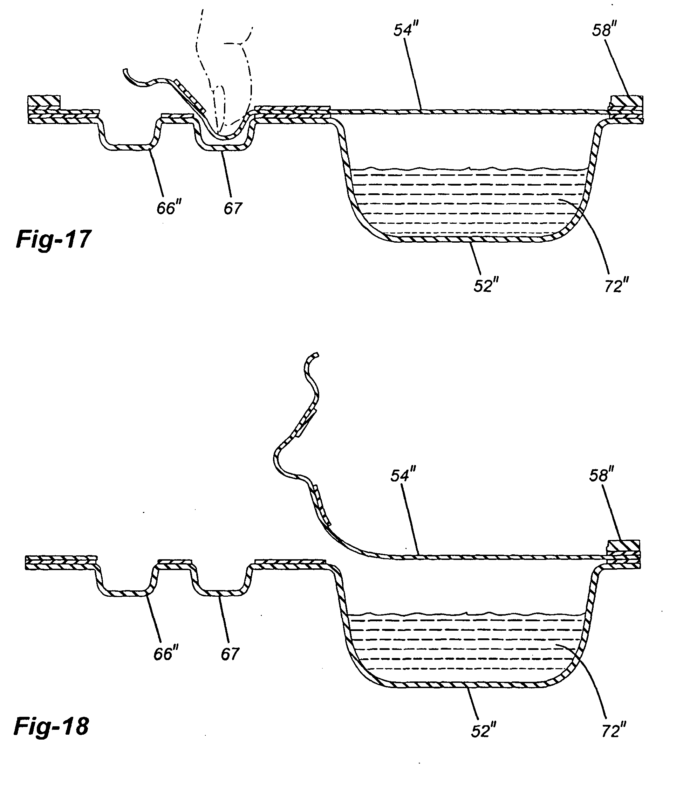

In this embodiment, there are provided two depressions 66" and 67 formed in blister layer 50". As illustrated in Figures 16 and 17, a finger may be utilized to break the foil layer 54" by depressing in depression 66". Subsequently, pressing on foil layer 54" at depression 67 will permit the end of foil layer 54" to extend upwardly and thus be easily gripped by the fingers of the user.

## Claims

1. A child resistant and senior friendly tamper evident package, said package comprising:
a blister sheet (50) having at least one blister pocket (52) projecting from a front side thereof,
a first depression (66) formed in said blister sheet adjacent said blister pocket;
a foil layer (54) sealed to a back side of said blister sheet (50) to form a continuous cover over said blister pocket (52);
a paperboard layer (58) having portions thereof adhered to said foil layer (54),
**characterized by,**
said foil layer (54) being rupturable;
a tear strip (62) being formed in said paperboard layer (58), said tear strip (62) being adhered to said foil (54) about the periphery of said tear strip (62);
a tab member (64) connected to said tear strip (62) at one end thereof,
the arrangement being such that when said tab (64) and tear strip (62) are removed,
said foil (54) then can be ruptured adjacent to said depression (66) and said foil (54) removed.

2. The package of Claim 1, further including a paper (76) adhered to said rupturable foil there intermediate said rupturable foil layer (54) and said paperboard layer (58).

3. The package of Claim 1, further including a second depression (67) formed in said blister sheet (50) between said first depression (66) and said blister pocket (52).

4. A child resistant and senior friendly tamper evident package comprising:
a blister sheet (80) having at least one blister pocket (82) projecting from a front side thereof;
a foil layer (86) adhered to a back side of said blister sheet (80) to form a continuous cover over said blister pocket (82);
a reinforcing layer (90) of a paperboard material, said reinforcing layer (90) having a first side with at least portions of said first side adhered to said foil layer (86);
**characterized by**,
a tear strip (96) formed in said paperboard layer, said tear strip (96) overlying said blister pocket,
said tear strip having a first tab (98) at a first end thereof and being connected to said tear strip (96),
a second tab (102) at a second end of said tear strip end being separated from said tear strip by a cut (100) through said paperboard layer, each of said tabs being non adhered to said foil layer (86); and
said foil having a gripping portion (104) to enable grasping thereof, said gripping portion being exposed upon removal of said second tab (102).

5. The package of Claim 4, wherein said gripping portion of said foil layer comprises a foil layer tab (104), said foil layer tab (104) not being adhered to said blister layer.

6. The package of Claim 4, wherein said blister layer has a depression (66) formed therein under said gripping portion to permit rupturing of said foil layer (86).

## Patentansprüche

1. Kindersichere und altersgerechte Sicherheitsverpackung bestehend aus:
einer Blister-Bahn (50) mit zumindest einem von der Vorderseite abstehenden Blister-Fach (52);
einer ersten, in der Blisterbahn ausgebildeten Mulde (66), die dem Blister-Fach benachbart ist;
eine dicht schließend auf der Rückseite der Blister-Bahn (50) aufgebrachten Folienschicht (54), die zum durchgehenden Bedecken des Blister-Fachs (52) ausgebildet ist;
einer Pappschicht (58), die in Bereichen mit der Folienschicht (54) verklebt ist,
**dadurch gekennzeichnet,**
**dass** die Folienschicht (54) durchbrechbar ist;
**dass** ein Aufreißstreifen (62) in der Pappschicht (58) ausgebildet ist, wobei der Aufreißstreifen (62) umfangseitig mit der Folie (54) verklebt ist;
**dass** ein Laschenelement (64) endseitig mit dem Aufreißstreifen (62) verbunden ist, wobei beim Entfernen der Lasche (64) und des Aufreißstreifens (62) die Folie (54) in der Nähe der Mulde (66) durchbrechbar und die Folie (54) entfernbar ist.

2. Verpackung nach Anspruch 1, **dadurch gekennzeichnet, dass** zwischen der durchbrechbaren Folienschicht (54) und der Pappschicht (58) ein Papier (76) vorgesehen ist, das mit der durchbrechbaren Folie verklebt ist.

3. Verpackung nach Anspruch 1, **dadurch gekennzeichnet, dass** eine zweite Mulde (67) vorgesehen ist, die in der Blister-Bahn (50) zwischen der ersten Mulde (66) und dem Blister-Fach (52) ausgebildet ist.

4. Eine kindersichere und altersgerechte Sicherheitsverpackung umfassen eine Blister-Bahn (80) mit zumindest einem von der Vorderseite abstehenden Blister-Fach (82); einer auf die Rückseite der Blister-Bahn (80) aufgeklebten Folienschicht (86), die zur durchgehenden Bedeckung des Blister-Fachs (82) ausgebildet ist;
einer Verstärkungsschicht (90) aus Pappmaterial, wobei die Verstärkungsschicht (90) eine erste Seite aufweist, die zumindest bereichsweise mit der Folienschicht (86) verklebt ist;
**dadurch gekennzeichnet,**
**dass** in der Pappschicht ein Aufreißstreifen (96) ausgebildet ist, der oberhalb des Blister-Fachs liegt,
**dass** der Aufreißstreifen an einem ersten Ende eine Lasche aufweist, die mit dem Aufreißstreifen (96) verbunden ist,
**dass** eine zweite Lasche (102) am zweiten Ende des Aufreißstreifen angeordnet ist, die vom Aufreißstreifen durch einen Einschnitt (100) durch die Pappschicht getrennt ist, wobei die beiden Laschen nicht mit der Folienschicht (86) verklebt sind; und
**dass** die Folie einen Griffbereich (104) zum Ergreifen der Folie aufweist, wobei der Griffbereich durch das Entfernen der zweiten Lasche (102) freigelegt wird.

5. Verpackung nach Anspruch 4, **dadurch gekennzeichnet, dass** der Griffbereich der Folienschicht eine Folienschichtlasche (104) aufweist, die nicht mit der Blister-Schicht verklebt ist.

6. Verpackung nach Anspruch 4, **dadurch gekennzeichnet, dass** die Blister-Schicht eine darin ausgebildete, unterhalb des Griffbereichs angeordnete Mulde (66) aufweist, um ein Durchbrechen der Folienschicht (86) zu ermöglichen.

## Revendications

1. Emballage inviolable à l'épreuve des enfants et adapté aux aînés, ledit emballage comprenant :
une feuille thermoformée (50) ayant au moins une poche thermoformée (52) faisant saillie de son côté avant,
une première cavité (66) formée dans ladite feuille thermoformée au voisinage de ladite poche thermoformée ;
une couche de film (54) scellée sur un côté arrière de ladite feuille thermoformée (50) pour former une coiffe continue sur ladite poche thermoformée (52) ;
une couche de carton (58) dont des parties sont collées à ladite couche de film (54), **caractérisé en ce que :**
ladite couche de film (54) est frangible ;
une bande déchirable (62) est formée dans ladite couche de carton (58), ladite bande déchirable (62) étant collée sur ledit film (54) autour de la périphérie de ladite bande déchirable (62) ;
un élément formant languette (64) est raccordé à ladite bande déchirable (62) à une de ses extrémités,
l'aménagement étant tel que, lorsqu'on retire ladite languette (64) et ladite bande déchirable (62),
ledit film (54) puisse être rompu à proximité de ladite cavité (66) et ladite feuille (54) retirée

2. Emballage selon la revendication 1, comprenant en outre un papier (76) collé sur ledit film frangible entre ladite couche de film frangible (54) et ladite couche de carton (58).

3. Emballage selon la revendication 1, comprenant en outre une seconde cavité (67) formée dans ladite feuille thermoformée (50) entre ladite première cavité (66) et ladite poche thermoformée (52).

4. Emballage inviolable à l'épreuve des enfants et adapté aux aînés comprenant :
une feuille thermoformée (80) ayant au moins une poche thermoformée (82) faisant saillie de son côté avant ;
une couche de film (86) collée sur un côté arrière de ladite feuille thermoformée (80) pour former une coiffe continue sur ladite poche thermoformée (82) ;
une couche de renforcement (90) d'un matériau de type carton, ladite couche de renforcement (90) ayant un premier côté avec au moins des parties dudit premier côté collées sur ladite couche de film (86) ; **caractérisé par**
une bande déchirable (96) formée dans ladite couche de carton, ladite bande déchirable (96) recouvrant ladite poche thermoformée,
ladite bande déchirable ayant une première languette (98) à l'une de ses premières extrémités et étant raccordée à ladite bande déchirable (96),
une seconde languette (102) à une seconde extrémité de ladite extrémité de bande déchirable et étant séparée de ladite bande déchirable par une découpe (100) à travers ladite couche de carton, chacune desdites languettes n'étant pas collée sur ladite couche de film (86) ; et
ledit film ayant une partie de préhension (104) pour permettre sa saisie, ladite partie de préhension étant exposée lors du retrait de ladite seconde languette (102).

5. Emballage selon la revendication 4, dans lequel ladite partie de préhension de ladite couche de film comprend une languette de couche de film (104), ladite languette de couche de film (104) n'étant pas collée sur ladite couche thermoformée.

6. Emballage selon la revendication 4, dans lequel une cavité (66) est formée dans ladite couche thermoformée en dessous de ladite partie de préhension pour permettre la rupture de ladite couche de film (86).
